(19) Europäisches Patentamt / European Patent Office / Office européen des brevets

(11) **EP 1 887 120 A1**

(12) **EUROPEAN PATENT APPLICATION**

(43) Date of publication:
**13.02.2008 Bulletin 2008/07**

(51) Int Cl.:
*D04H 1/42* *(2006.01)*    *D04H 1/72* *(2006.01)*

(21) Application number: **07019035.0**

(22) Date of filing: **16.09.2004**

(84) Designated Contracting States:
**DE FR GB**

(30) Priority: **22.09.2003 JP 2003330404**

(62) Document number(s) of the earlier application(s) in accordance with Art. 76 EPC:
**04773168.2 / 1 681 379**

(71) Applicant: **Mitsubishi Chemical Functional Products, Inc.**
**Chiyoda-ku,**
**Tokyo 100-0005 (JP)**

(72) Inventors:
- **Kakikura, Eisaku**
  **Joetsu-shi, Niigata 9428644 (JP)**
- **Sasaki, Toshiaki**
  **Joetsu-shi, Niigata 9428644 (JP)**

(74) Representative: **HOFFMANN EITLE**
**Patent- und Rechtsanwälte**
**Arabellastrasse 4**
**81925 München (DE)**

Remarks:
This application was filed on 27-09-2007 as a divisional application to the application mentioned under INID code 62.

(54) **Process for producing an alumina fiber aggregate and alumina fiber aggregate obtainable therefrom**

(57)    Process for producing an alumina fiber aggregate comprising spinning with a spinning solution by blowing method to obtain an alumina short fiber precursor aggregate and calcining the alumina short fiber precursor aggregate, characterized in that the scatter of gas flow velocity per slit from an air nozzle is within $\pm$ 15 % and the scatter of liquid flow rate per spinning solution supply nozzle is within $\pm$ 5 %.

EP 1 887 120 A1

Printed by Jouve, 75001 PARIS (FR)

**Description**

TECHNICAL FIELD

The present invention relates to a novel alumina fiber aggregate and a support mat for catalytic converters comprising such a fiber aggregate.

BACKGROUND ART

Alumina fiber aggregate, by making use of its excellent heat resistance, is made into blankets, etc., for use as a heat insulator, heat-resistant cushioning material and such. It is remarkable that, recently, as a result of establishment of the basic techniques for use of alumina fiber as a support mat for catalytic converters by the present applicant (Patent Documents 1 and 2), there has been a sharp increase of demand for alumina fiber mostly for the above-said use.
Such alumina fiber blankets can be produced, for instance, by the following method. A spinning operation is carried out with a spinning solution containing basic aluminum chloride, a silicon compound, an organic polymer and water by the blowing method and the obtained alumina short fiber precursor aggregate (laminate sheet) is calcined, if necessary after needling. In the calcination step, the volatiles are removed and at the same time crystallization of alumina and silica proceeds to make alumina fiber. There is consequently obtained a blanket of alumina fiber aggregate comprising alumina short fibers. This method is generally called precursor fiber forming method (Patent Document 3).
When the diameter of alumina short fibers (hereinafter referred to as fiber diameter) is small, these short fibers tend to scatter, making them hard to handle and also producing an undesirable effect to the working environmental hygiene. It has been also reported recently that the alumina fibers with a diameter of less than 3 $\mu$m may be inhaled into the human body and could even reach pulmonary alveoli to cause a serious health problem. On the other hand, it is difficult to control the diameter of alumina fibers, and generally there is a trend toward widening of fiber diameter distribution, making it harder to get rid of the fibers with a diameter of less than 3 $\mu$m (Non-Patent Document 1). The fibers with too large diameters are also undesirable as they are prone to deteriorate the industrially useful properties such as heat resistance and cushioning characteristics of the alumina fiber aggregate.
Patent Document 1: Japanese Patent No. 3,282,362
Patent Document 2: Japanese Patent Application Laid-Open (KOKAI) No. 8-174687
Patent Document 3: Japanese Patent Application Laid-Open (KOKAI) No. 2000-80547
Non-Patent Document 1: Official Journal of the European Communities, 21,8,2001 L225/9

DISCLOSURE OF THE INVENTION

PROBLEM TO BE SOLVED BY THE INVENTION

The present invention has been made in view of the above circumstances, and its object is to provide an alumina fiber aggregate which is well controlled in the distribution of fiber diameter to substantially keep free from the problems on working environmental hygiene and health, and is improved in various properties in use for a support mat for catalytic converters or such.

MEANS FOR SOLVLING THE PROBLEM

In view of the above problem, the present inventors have pursued studies on the means for controlling the range of fiber diameter in the alumina fiber aggregate and, as a result, have found that by specifying the production conditions more closely, it is possible to obtain a fiber aggregate having a desired average fiber diameter and very sharp in fiber diameter distribution, and that by use of such alumina fiber aggregates, the performance of the support mat for catalytic converters can be drastically improved.
The present invention has been attained on the basis of the above finding, and it provides an alumina fiber aggregate comprising alumina short fibers and having such properties that when the diameters of said alumina short fibers are represented by x ($\mu$m), the rate at which the natural logarithmic value lnx in lognormal distribution of x is less than ln3 is not more than 2%, and the value left after deducting from the length-weighted geometric mean of said fiber diameters a value twice its standard error is not more than 6 $\mu$m.

EFFECT OF THE INVENTION

According to the present invention, there is provided an alumina fiber aggregate comprising alumina short fibers, which is substantially free from the fibers with diameters of less than 3 $\mu$m and which also does not contain the fibers with excessively large diameters as the fiber diameter distribution is narrowed. Consequently, the fiber aggregate of the present invention is improved in air tightness and cushioning effect, and when it is applied to support mat for catalyst converters or the like, an enhanced practical performance of such a support mat can be realized. Such an alumina fiber aggregate of the present invention is limited in scatter of fibers during handling thereof, so that it excels in handling characteristics and is also advantageous from the aspects of working environmental hygiene and wholesomeness. As apparent from the above, the industrial value of the present invention is remarkable.

BEST MODE FOR CARRYING OUT THE INVENTION

The present invention is described in detail below. The alumina fiber aggregate according to the present invention is produced usually by a precursor fiber forming method such as mentioned above and structurally comprises alumina short fibers. The alumina fiber aggregate of the present invention has such properties that when the measured values of diameters of the said alumina short fibers are represented by x ($\mu$m), the rate at which the natural logarithmic value lnx in the lognormal distribution of x is less than ln3 is not more than 2%, and that the value left after deducting from the length-weighted geometric mean of fiber diameter a value twice its standard error is not more than 6 $\mu$m.

Firstly, the first feature of the present invention - the fact that "when the measured values of diameters of the alumina short fibers are represented by x ($\mu$m), the rate at which the natural logarithmic value lnx in the lognormal distribution of x is less than ln3 is not more than 2%" - is explained.

Generally, the alumina short fiber diameters take an asymmetric distribution pattern with a longer extent on the greater diameter side, but those of the fiber diameters which took natural logarithms of x show a distribution close to normal distribution. In such a case, we say that the fiber diameters conform to lognormal distribution. The said rate (of the natural logarithmic value being less than ln3) signifies the statistical probability at which the fibers with a diameter of less than 3 $\mu$m are contained in the fibers composing the alumina fiber aggregate. To put it flatly, the definition that the said rate is not more than 2% may be taken to indicate that the fiber aggregate substantially contains no fibers with a diameter of less than 3 $\mu$m.

The alumina short fibers contemplated here are those defined by the fact that when the fiber diameters are represented by x ($\mu$m), the rate at which the natural logarithmic value lnx in the lognormal distribution of x is less than ln3 is not more than 2%, preferably not more than 1%, more preferably not more than 0.2%. It is desirable that such a standard value be as close to zero % as it can be, but actually it is decided by taking into account the factors involving industrial producibility and permissibility in terms of handling and working environmental hygiene. In view of this, the allowable lower threshold of the said standard value is considered to be around 0.01%.

Next, the second feature of the present invention - the fact that "the value left after deducting from the length-weighted geometric mean of alumina short fiber diameter a value twice its standard error" - is explained. The "standard error" mentioned here means the error involved in the presumption of mean value. In presuming the mean value from population, it is of common practice to pick up samples from population and determine the sample mean. This sample mean distribution infallibly turns out a normal distribution regardless of the distribution pattern of population. The standard deviation from this sample mean distribution is called standard error, and the value given after dividing the standard deviation from population by the square root of case number of sample assembly is equivalent to the said standard error. However, since population standard deviation is usually unknown, the presumed value of population standard deviation calculated from the standard assembly (sample standard deviation) is substituted for it and calculated from the following equation:

$$\mathrm{SE} \fallingdotseq \sqrt{\{\Sigma(x_i - m)^2/(n - 1)n\}}$$

wherein SE is standard error, m is sample mean, and n is case number of sample assembly.

As is seen from the above equation, the greater the case number n of sample assembly, the smaller the standard deviation from sample mean, viz. the standard error, hence the smaller the error between sample mean and population mean, which leads to so much enhancement of reliability of sample mean. In the present invention, there was used a system in which all the calculations were made using natural logarithms, with determinations being finally returned to index numbers, in accordance with the testing method relating to length-weighted geometric mean diameter of artificial mineral fibers laid down by European Chemicals Bureau (ECB/TM/1(00)rev.2, DRAFT-4).

Distribution of sample mean is a normal distribution as mentioned above. In normal distribution, standard deviation signifies the distance from the mean value to the point of inflection of distribution, and as is well known, approximately 95% of the whole data are contained in mean $\pm$ 2 standard deviation. That is, mean minus 2 standard deviation denotes the lower threshold of the 95% predicted section and mean plus 2 standard deviation denotes the upper threshold of the 95% predicted section.

The definition that "the value left after deducting from the length-weighted geometric mean of alumina short fiber diameter a value twice its standard error is not more than 6 $\mu$m" may be taken to indicate, to put it more flatly, that the substantially smallest value that can be surmised as the true mean fiber diameter of the whole alumina fiber aggregate is not more than 6 $\mu$m. Similarly, the definition that "the sum of the length-weighted geometric mean of alumina short fiber diameter and the value twice its standard error is not more than 6 $\mu$m" may be taken to indicate that the greatest value that can be surmised as the true mean fiber diameter of the whole alumina fiber aggregate is not more than 6 $\mu$m. In the alumina short fibers according to the present invention, the value left after deducting from the length-weighted geometric mean of fiber diameter a value twice its standard error is not more than 6 $\mu$m.

The thus specified alumina fiber aggregate of the present invention may be deemed substantially not containing the fibers with a diameter of less than 3 $\mu$m even though the center of the fiber diameter distribution is substantially not more than 6 $\mu$m. The above-mentioned Non-Patent Document 1 teaches that because of usually wide diameter distribution of the artificial mineral fibers which are not controlled in diameter, it is necessary to select the fibers more than 6 $\mu$m in mean diameter for sufficiently excluding the fibers of less than 3 $\mu$m which have carcinogenicity. The alumina fiber aggregate according to the present invention does not substantially contain the fibers of less than 3 $\mu$m having carcinogenicity in spite of the fact that it falls into the carcinogenic category in alumina short fiber diameter.

Such fiber diameter distribution is preferred for the reason that if there exist the fibers with small diameters in abundance, the fibers become liable to scatter, deteriorating their handling characteristics and also producing undesirable effects to the working environmental hygiene and health, while on the other hand, if fiber diameter is too large, generally heat insulation (airtightness) and cushioning properties of the alumina short fiber aggregate deteriorates.

The alumina fiber aggregate of the present invention may seem, in a way, to amount to no more than a slight variation of fiber diameter distribution of the conventional alumina fiber aggregates, but it is quite remarkable that a drastic improvement of performance is realized when the fiber aggregate of the present invention is applied to a support mat for catalytic converters. Realization of such a drastic improvement is attributable to certain reasons, for example the facts that the fibers are easy to accumulate uniformly and the catalytic converter support mat made thereof has no positional dependency of properties and is stabilized in surface pressure, and that since there are contained no fibers with excessively large diameters as mentioned above, airtightness and cushioning properties are improved.

The support mat according to the present invention is, in most cases, used by disposing it in a space between the catalyst carrier and its surrounding shell in a catalytic converter for cleaning exhaust gas, but its use is not limited to such an instance. For example, it is finding use in the similar way in the catalytic converters for fuel cells in recent years.

In the alumina fiber aggregate according to the present invention, in order to further improve its properties such as airtightness and cushioning effect, it is preferable that the fiber diameter distribution is sharp. For this reason, the difference between the length-weighted geometric mean of alumina short fiber diameter and the value twice its standard error should be not more than 6 $\mu$m, preferably not more than 5.5 $\mu$m. Also, the sum of the length-weighted geometric mean of fiber diameter and the value twice its standard error should be not more than 6.5 $\mu$m, preferably not more than 5.6 $\mu$m. Further, the ratio of the alumina short fibers with a diameter of not less than 10 $\mu$m should be not more than 4%, preferably not more than 2%, more preferably not more than 1%. Here, the expression that "the ratio of the alumina short fibers with a diameter of not less than 10 $\mu$m is not more than 4%" means that the ratio of these alumina short fibers is such that the natural logarithmic value lnx in lognormal distribution of fiber diameter x is not less than 1n10. Further, length-weighted geometric mean diameter is usually in the range of 4.0 to 5.5 $\mu$m, preferably 4.5 to 5.5 $\mu$m.

A method of producing the above-described alumina fiber aggregate according to the present invention is explained below. First the ordinary procedure used for producing the alumina fiber aggregate of the present invention is described, and then the points for consideration in producing the alumina fiber aggregate of the present invention are discussed.

First, as the ordinary production procedure, usually a method (precursor fiber forming method) is used in which a spinning operation is carried out with a spinning solution containing a basic aluminum chloride, a silicon compound, an organic polymer and water by the blowing method and the obtained alumina fiber precursor aggregate is calcined. The procedure comprises essentially a spinning solution preparation step, a spinning step and a calcining step, with a needling step being incorporated as an option between the spinning and calcining steps.

<Spinning solution preparation step>

Basic aluminum chloride $Al(OH)_{3-x}Cl_x$ can be prepared, for example, by dissolving metallic aluminum in an aqueous solution of hydrochloric acid or aluminum chloride. In the above chemical formula, X is a number of usually 0.45 to 0.54, preferably 0.5 to 0.53. Silica sol is preferably used as the silicon compound in the spinning solution, but other substances such as tetraethyl silicate and water-soluble silicon compounds such as water-soluble siloxane derivatives can be used. As the organic polymer, for instance the water-soluble polymeric compounds such as polyvinyl alcohol, polyethylene glycol and polyacrylamide are preferably used. The polymerization degree of these polymers is usually 1,000 to 3,000.

As the spinning solution, there is used a preparation in which the aluminum/silicon ratio, calculated as $Al_2O_3/SiO_2$ ratio by weight, is usually 99/1 to 65/35, preferably 99/1 to 70/30, and the concentration of the basic aluminum chloride is 150 to 190 g/L. When the ratio of the silicon compound is less than the above-defined range, alumina composing the short fibers tends to transform into $\alpha$-alumina, and also embrittlement of the short fibers tends to take place due to coarsening of alumina particles. On the other hand, when the ratio of the silicon compound exceeds the above-defined range, the amount of silica ($SiO_2$) formed with mullite ($3Al_2O_3 \cdot 2SiO_2$) tends to increase to cause a reduction of heat resistance.

When the concentration of the basic aluminum chloride is less than 150 g/L or the concentration of the organic polymer is less than 16 g/L, no appropriate viscosity can be obtained and the fiber diameter is diminished in either case. Thus, because of the presence of excess free water in the spinning solution, the drying speed in spinning by the blowing method is low and stretch advances to excess, causing a change in diameter of the spun out precursor fibers and making it impossible to obtain the short fibers having a schemed mean fiber diameter and a sharp distribution of fiber diameter. Further, when the concentration of the basic aluminum chloride is less than 150 g/L, productivity drops. On the other hand, when the concentration of the basic aluminum chloride exceeds 190 g/L or the concentration of the organic polymer exceeds 40 g/L, no desired spinning solution can be obtained because of too high viscosity in either case. The preferred range of concentration of the basic aluminum chloride is 150 to 185 g/L, more preferably 155 to 185 g/L, and the preferred range of concentration of the organic polymer is 25 to 35 g/L.

The spinning solution is prepared by adding a silicon compound and an organic polymer to an aqueous solution of basic aluminum chloride, and concentrating the solution so that the concentrations of the basic aluminum chloride and the organic polymer would fall within the above-defined ranges. Viscosity of the spinning solution at normal temperature is usually 1 to 1,000 poises, preferably 10 to 100 poises.

<Spinning>

Spinning (fiber forming from the spinning solution) is carried out by the blowing method in which the spinning solution is supplied into a high-speed spinning air stream, whereby it is possible to obtain alumina short fiber precursors with a length of several ten to several hundred mm. The spinning nozzle used in the above spinning operation, although not specifically defined structurally, is preferably of a structure, such as described in Japanese Patent No. 2,602,460, in which the air stream blown out from an air nozzle and the flow of the spinning solution forced out from the spinning solution supply nozzles are caused to run parallel to each other, and also the parallel flow of air is sufficiently rectified before contacting the spinning solution. In this case, the spinning nozzle diameter is usually 0.1 to 0.5 mm, the liquid flow rate per spinning solution supply nozzle is usually 1 to 120 ml/h, preferably 3 to 50 ml/h, and the gas flow velocity per slit from the air nozzle is usually 40 to 200 m/s. The scatter of liquid flow rate per spinning solution supply nozzle is usually within $\pm 5\%$, preferably within $\pm 2\%$, and the scatter of gas flow velocity per slit from the air nozzle is usually within $\pm 15\%$, preferably within $\pm 8\%$. More precise control of such liquid and gas flow velocities is considered to be a very important factor for making sharper the fiber diameter distribution.

There are two factors for making precise control of such liquid flow velocity. One is to control the fine pulsation of the pump itself which supplies the liquid, and the other is to eliminate the variation of flow rate between the spinning nozzles to make constant the flow rate per spinning nozzle. Several methods are available for controlling the fine pulsation of the liquid feed pump. For instance, there is used a pump of the system in which, like in a three-throw diaphragm type, the plural cylinders are operated by shifting the phase to thereby control the pulsation, or an accumulator is set between the pump and the spinning nozzles and the volume of the accumulator body portion is varied to absorb pulsation and impact pressure. On the other hand, variation of flow rate between the spinning nozzles is caused as the nozzle positioned closer to the inlet of the spinning solution has a higher discharge pressure (back pressure). As a method for eliminating such variation of flow rate, it is attempted, for instance, to pack a stainless wool-like material in the liquid passage at a location in front of the spinning nozzle to uniformize back pressure of the spinning nozzle.

Also, for making precise control of the gas flow velocity, it is important to control the fine pulsation of the compressor which supplies the gas and to uniformize discharge pressure (back pressure) of the air nozzle. A method for controlling the fine pulsation of the compressor which supplies gas is to provide a reservoir tank between the compressor and the air nozzle to let it function as a buffer for lessening deflection of the gas flow rate. Deflection of discharge pressure of the air nozzle is attributable to the reason that the gas flow becomes fast at the middle portion of the air nozzle as it is positioned close to the gas inlet while the gas flow becomes slow toward both ends of the air nozzle because of being distant from the gas inlet. As means for uniformizing discharge pressure of the air nozzle, it is proposed to incorporate an approach plate (baffle plate) in the gas passage, or to arrange the slits of the air nozzle to have a certain distribution in their interval so that the slit interval will be narrowed at the section where the gas flow is fast.

According to the above-said spinning nozzle system, the spinning solution forced out from the spinning solution supply nozzle is sufficiently drawn out without becoming atomized, making the fibers hardly fused to each other, so that by optimizing the spinning conditions, it is possible to obtain a uniform alumina fiber precursor with a narrow distribution of fiber diameter.

Further, it is preferable in this spinning operation that the sufficiently drawn out fibers be formed from the spinning solution under the condition of controlled evaporation of water and decomposition of the spinning solution, and the thus formed fibers be dried quickly. For effecting this, it is preferable to change the ambient atmosphere from a state of controlling evaporation of water to a state of promoting evaporation of water in the process from formation of fibers from the spinning solution till arrival of the formed fibers at the fiber collector. For this purpose, the relative humidity at the point where the spinning solution begins to contact the air stream is set at usually not lower than 35%, preferably not lower than 40%. The upper threshold of relative humidity is not specifically defined, but since too high humidity tends to cause fusion of the fibers to each other, relative humidity is usually arranged to be not more than 50%. The temperature at the point of contact of the spinning solution with the air stream is set at usually 0 to 40°C, preferably 5 to 30°C, more preferably 10 to 20°C. Also, relative humidity of the air stream near the fiber collector is selected to be not more than 35%, preferably not more than 30%, and the temperature of the air stream near the fiber collector is set at usually 30 to 50°C, preferably 35 to 40°C.

If the temperature of ambient atmosphere is too high at the stage where the sufficiently drawn out fibers are to be formed from the spinning solution, it is hard to form the sufficiently drawn out fibers because of rapid evaporation of water and/or other causes, and also the formed fibers tend to have faults, making frail the finally obtained inorganic oxide fibers. On the other hand, when the fibers are formed from the spinning solution in a low-temperature or high-humidity atmosphere for controlling evaporation of water, since the same atmosphere is retained even after formation of fibers, the formed fibers tend to adhere to each other or may be formed into liquid droplets due to elastic recovery to produce shots. The aggregate of alumina fiber precursor can be recovered as a continuous sheet (thin-layer sheet) by an accumulating device of a structure in which a metallic endless belt is provided substantially perpendicularly to the spinning air stream and, with this endless belt being kept rotated, the spinning air stream carrying the alumina short fiber precursor therewith is let impinge against the endless belt.

The thin-layer sheet recovered by the accumulating device is continuously delivered into a folding device whereby the sheet is folded into a prescribed width, stacked up and continuously moved in the direction vertical to the folding direction to form a laminate sheet. As it is positioned on the inner side of the thin-layer sheet, the basis weight of the laminate sheet becomes uniform throughout the sheet. As the folding device, for instance one described in Japanese Patent Application Laid-Open (KOKAI) No. 2000-80547 may be used.

<Needling>

Needling on the aggregate (laminate sheet) of alumina short fiber precursor provides an alumina fiber aggregate having high mechanical strength and oriented in the thickness direction, too. Needling is conducted usually at a rate of 1 to 50 punches/cm$^2$. Generally, the greater the number of punches, the higher the bulk density and peel strength of the alumina fiber aggregate.

<Calcination>

Calcination is carried out at a temperature of usually not lower than 500°C, preferably 700 to 1,400°C. When the calcinations temperature is below 500°C, the obtained alumina fibers lack in strength because of insufficient crystallization, and when the calcination temperature exceeds 1,400°C, crystal growth of fibers advances to give only low-strength frail alumina fibers.

EXAMPLES

The present invention is described below in more detail by showing the examples thereof, but it should be understood that the present invention is not limited to these examples but can be embodied otherwise without departing from the scope of the invention. In the following examples, diameter distribution of alumina short fibers was determined according to the following procedure.

<Determination of fiber diameter distribution>

(1) A small amount (about an earpickful) of fibers are picked up from an alumina fiber matt with a pincette.
(2) The picked up fibers are placed, in a way not causing them to lie one upon another as much as possible, on a carbon-made conductive tape attached to the specimen support mat of a scanning electron microscope (SEM).

(3) A platinum-palladium thin film is deposited to a thickness of 1 to 3 nm on the specimen surface to impart conductivity to the fiber surface.

(4) The deposited specimen is put into the measuring chamber of SEM and observed at a magnification appropriate for measuring fiber diameter, and the observed image is photographed. As SEM, a Nippon Electron's scanning electron microscope "JSM-6320F" was used, conducting observation under the conditions of accelerated voltage of 15 KV and working distance (WD) of 15 mm. Magnification was properly selected from the range of X1,000 to X3,000.

(5) From the SEM photographs taken in (4), measurement is made to one tenths of a millimeter by slide calipers or straightedge. Diameter and length of the randomly selected fibers, 100 in all, are measured.

(6) Fiber diameter is calculated from the following equation. In this case, the calculated values are rounded to one decimal.

$$\text{Fiber diameter } (\mu m) = (\text{measured value/observation magnification}) \times 1,000$$

(7) When statistically a logarithmic representation of a certain variable is normally distributed, it is considered that the original variable follows a lognormal distribution. Usually the said fiber diameters follow a lognormal distribution.

(8) The logarithmic normal distribution obtained from logarithmic transformation of fiber diameter is converted to standard normal distribution, and the rate at which lnx is less than ln3 and the rate at which lnx is not less than ln10 are read from the normal distribution table.

(9) The length-weighted geometric mean diameter is defined by the following equation.

$$LWGMD = EXP((\sum_{i=1}^{n} L_i \ln D_i) / \sum_{i=1}^{n} L_i)$$

wherein LWGMD: length-weighted geometric mean diameter

    $L_i$: fiber length
    $D_i$: fiber diameter
    n: case number of sample assembly

In ECB/TM/1(00)rev.2 DRAFT-4 in European chemicals Bureau (ECB) Testing Methods, it is taught that the length-weighted geometric mean diameter of mineral fibers can be approximated by the following equation, so in the present invention, the length-weighted geometric mean diameter is calculated from the following equation.

$$LWGMD = EXP((\sum \ln D_i)/n)$$

(10) Further, in accordance with the explanations in ECB/TM/1(00)rev.2 DRAFT-4, "length-weighted geometric mean diameter - 2 x standard error" is calculated from the following equations (a) to (d):

$$(a)\quad \overline{\ln D} = (\sum \ln D)/n$$

$$(b)\quad SD_{\ln D} = \sqrt{((\sum(\ln D - \overline{\ln D})^2/(n-1))}$$

$$(c) \quad SD_{\overline{lnD}} = SD_{lnD}/(\sqrt{n})$$

$$(d) \quad LWGMD-2SE = EXP(\overline{lnD}-2SE_{lnD})$$

wherein

$\overline{lnD}$ : logarithmic mean of fiber diameter
$SD_{lnD}$ : standard deviation of logarithm of fiber diameter
$SD_{\overline{lnD}}$ : standard error of logarithm of fiber diameter (standard deviation of logarithmic mean of fiber diameter)
SE : standard error

(11) Measurement of surface pressure and air flow velocity

Using a 50 mm square sample blanked from a sheet-like fiber aggregate, the surface pressure when the gap-filled bulk density (GBD) was 0.35 g/cm$^3$ was measured by autograph. Then, using a 150 mm x 74 mm rectangular sample blanked from the same fiber aggregate, it was compressed in the thickness direction so that GBD would become 0.35 g/cm$^3$. In this state, compressed air was flown in the direction of the longer side on the plane of the sheet, and the air flow rate when the differential pressure was 20 kPa was measured. The measured value was divided by the sectional area given by the product of thickness and length of the longer side of the sheet to determine flow velocity.

Example 1

<Preparation of spinning solution>

To an aqueous solution of basic aluminum chloride $Al(OH)_{3-x}Cl_x$ (X = 0.51) with an aluminum concentration of 75g g/L, a 20 wt% silica sol solution and a 5 wt% polyvinyl alcohol (polymerization degree: 1,700) solution were added in amounts of 276 g and 315 g, respectively, per litre of the $Al(OH)_{3-x}Cl_x$ solution and mixed, and the mixed solution was concentrated under reduced pressure at 50°C to obtain a spinning solution. The concentration of the obtained spinning solution was 40 poises (measured at 25°C by a rotational viscometer), the aluminum/silicon ratio ($Al_2O_3/SiO_2$ ratio by weight) was 72.0/28.0, the concentration of the basic aluminum chloride was 155 g/L, and the concentration of the organic polymer was 32.6 g/L.

<Spinning>

Spinning was carried out with the above spinning solution by the blowing method using a spinning nozzle of the same structure as shown in FIG. 6 of European Patent No. 495466 (Japanese Patent No. 2602460). In supply of the spinning solution via an accumulator by a three-throw diaphragm type pump, a stainless wool-like material was packed at a position just before the spinning nozzles to uniformize the back pressure, and the spinning operation was conducted under the following conditions: spinning solution supply nozzle diameter = 0.3 mm; solution flow rate per spinning solution supply nozzle = 5 ± 0.075 ml/h; air flow velocity (at slit of air nozzle) = 54 ± 3 m/s (pressure = 2 kg/cm$^2$, temperature = 18°C, RH = 40%). In collecting linters, 150°C hot air (prepared by heating atmospheric air of 30°C and 40% RH) was introduced to the screen as a parallel flow to the high-speed air stream to adjust the air flow near the fiber collector to a temperature of 35°C and RH of 30%. The fibers were recovered as a continuous sheet (thin-layer sheet) by an accumulating device of a structure in which a wire gauze endless belt was set substantially perpendicularly to the spinning air stream, and with this endless belt being turned, the spinning air stream carrying the alumina short fiber precursor was let impinge against it.

The thin-layer sheet recovered from the accumulating device was continuously discharged out and sent to a folding device whereby the sheet was folded down to a prescribed width and piled up, and thence the sheet was continuously moved on perpendicularly to the folding direction to form a laminate sheet. Used as the folding device was one having the same structure as described in Japanese Patent Application Laid-Open (KOKAI) No. 2000-80547.

<Production of alumina fiber aggregate>

After needling the laminate sheet (alumina short fiber precursor aggregate), the sheet was calcined in air at 1,250°C for one hour to obtain an alumina fiber aggregate. Needling was carried out by a needle punching machine to punch the sheet at a rate of 8 punches/cm$^2$. The length-weighted geometric mean fiber diameter of the obtained alumina fiber aggregate was 5.1 $\mu$m, and the ratio (existence probability) of the fibers with diameters of less than 3 $\mu$m was 0.02%. The main properties of the fiber aggregate are shown in Table 1 and Table 2.

Example 2

<Preparation of spinning solution>

To an aqueous solution of basic aluminum chloride Al(OH)$_{3-x}$Cl$_x$ (X = 0.51) with an aluminum concentration of 75 g/L, a 20 wt% silica sol solution and a polyvinyl alcohol (polymerization degree: 1,500) solution were added in amounts of 276 g and 315 g, respectively, per litre of the Al(OH)$_{3-x}$Cl$_x$ solution and mixed, and the mixed solution was concentrated under reduced pressure at 50°C to obtain a spinning solution. The concentration of the spinning solution was 35 poises (measured at 25°C by a rotational viscometer), the aluminum/silicon ratio (Al$_2$O$_3$/SiO$_2$ ratio by weight) was 72.0/28.0, the concentration of the basic aluminum chloride was 155 g/L, and the concentration of the organic polymer was 32.6 g/L.

<Spinning and production of alumina fiber aggregate>

Using the same spinning nozzle as used in Example 1, spinning was carried out in the similar way to Example 1 under the conditions of: spinning solution supply nozzle diameter = 0.3 mm; flow rate per spinning solution supply nozzle = 5 $\pm$ 0.10 ml/h; air flow velocity (at slit of air nozzle) = 46 $\pm$ 5 m/s (pressure = 2 kg/cm$^2$, temperature = 18°C, RH = 40%). In collecting linters, 165°C dry hot air (formed by heating atmospheric air of 30°C and 40% RH) was introduced to the screen as a parallel flow to the high-speed air stream to adjust the air flow near the fiber collector to a temperature of 38°C and RH of 28%. Using the same linter collector and the same accumulating device as used in Example 1, the fibers were recovered as a continuous sheet (thin-layer sheet). The length-weighted geometric mean fiber diameter of the obtained alumina fiber aggregate was 5.8 $\mu$m, and the ratio (existence probability) of the fibers with diameters of less than 3 $\mu$m was 1.59%. The main properties of the fiber aggregate are shown in Table 1 and Table 2.

Comparative Example 1

<Preparation of spinning solution>

To an aqueous solution of basic aluminum chloride Al(OH)$_{3-x}$Cl$_x$ (X = 0.51) with an aluminum concentration of 75 g/L, a 20 wt% silica sol solution and a 5 wt% polyvinyl alcohol (polymerization degree: 1,700) solution were added in amounts of 276 g and 315 g, respectively, per litre of the Al(OH)$_{3-x}$Cl$_x$ solution and mixed, and the mixed solution was concentrated under reduced pressure at 50°C to obtain a spinning solution. The concentration of the spinning solution was 40 poises (measured at 25°C by a rotational viscometer), the aluminum/silicon ratio (Al$_2$O$_3$/SiO$_2$ ratio by weight) was 72.0/28.0, the concentration of the basic aluminum chloride was 155 g/L, and the concentration of the organic polymer was 32.6 g/L.

<Spinning and production of alumina fiber aggregate>

Using the same spinning nozzle as used in Example 1, spinning was carried out in the same way as in Example 1 except that no stainless wool-like material was present in the liquid passage and no baffle plate was provided in the gas passage, under the conditions of: spinning solution supply nozzle diameter = 0.3 mm; liquid flow rate per spinning solution supply nozzle = 5 $\pm$ 0.35 ml/h; air flow velocity (at slit of air nozzle) = 54 $\pm$ 8.5 m/s (pressure = 2 kg/cm$^2$, temperature = 18°C, RH = 40%). In collecting linters, 150°C dry hot air (formed by heating atmospheric air of 30°C and 40% RH) was introduced to the screen as a parallel flow to the high-speed air stream to adjust the air flow near the fiber collector to a temperature of 35°C and RH of 30%. Using the same linter collector and the same accumulating device as used in Example 1, the fibers were recovered as a continuous sheet (thin-layer sheet). The length-weighted geometric mean fiber diameter of the obtained alumina fiber aggregate was 5.1 $\mu$m, and the ratio (existence probability) of the fibers with diameters of less than 3 $\mu$m was 2.13%. The main properties of the fiber aggregate are shown in Table 1 and Table 2. Although the properties per se of the fiber aggregate of this comparative example were almost on a par with Example 1, the ratio of the fibers with diameters of less than 3 $\mu$m was so high that this fiber aggregate was unfavorable as a commercial product.

Comparative Example 2

<Preparation of spinning solution>

To an aqueous solution of basic aluminum chloride $Al(OH)_{3-x}Cl_x$ (X = 0.51) with an aluminum concentration of 165 g/L, a 20 wt% silica sol solution and a 5 wt% polyvinyl alcohol (polymerization degree: 1,700) solution were added in amounts of 606 g and 608 g, respectively, per litre of the $Al(OH)_{3-x}Cl_x$ solution and mixed, and the mixed solution was concentrated under reduced pressure at 50°C to obtain a spinning solution. The concentration of the spinning solution was 60 poises (measured at 25°C by a rotational viscometer), the aluminum/silicon ratio ($Al_2O_3/SiO_2$ ratio by weight) was 72.0/28.0, the concentration of the basic aluminum chloride was 190 g/L, and the concentration of the organic polymer was 35.0 g/L.

<Spinning and production of alumina fiber aggregate>

Using the same spinning nozzle as used in Example 1, spinning was carried out in the same way as in Example 1 except that no stainless wool-like material was placed in the liquid passage and no baffle plate was provided in the gas passage, under the conditions of: spinning solution supply nozzle diameter = 0.3 mm; liquid flow rate per spinning solution supply nozzle = 5 $\pm$ 0.35 ml/h; air flow velocity (at slit of air nozzle) = 54 $\pm$ 8.5 m/s (pressure = 2 kg/cm$^2$, temperature = 18°C, RH = 40%). In collecting linters, 150°C dry hot air (formed by heating atmospheric air of 30°C and 40% RH) was introduced to the screen as a parallel flow to the high-speed air stream to adjust the air flow near the fiber collector to a temperature of 40°C and RH of 20%. Using the same linter collector and the same accumulating device as used in Example 1, the fibers was recovered as a continuous sheet (thin-layer sheet). The length-weighted geometric mean fiber diameter of the obtained alumina fiber aggregate was 6.9 $\mu$m, and the ratio (existence probability) of the fibers with diameters of less than 3 $\mu$m was 0.00%. The main properties of the fiber aggregate are shown in Table 1 and Table 2.

Table 1

|  | Example 1 | Example 2 | Comp. Example 1 | Comp. Example 2 |
|---|---|---|---|---|
| Length-weighted geometric mean diameter, $\mu$m | 5.1 | 5.8 | 5.1 | 6.9 |
| Length-weighted geometric mean diameter - 2 x standard deviation, $\mu$m | 4.9 | 5.3 | 4.8 | 6.5 |
| Probability, ln(X)<ln(3), % | 0.02 | 1.59 | 2.13 | 0.00 |
| Surface pressure at GBD = 0.35, kg/cm$^2$ | 3.19 | 3.01 | 3.21 | 2.63 |
| Air flow velocity (20 kPa) at GBD = 0.35, m/sec | 0.54 | 0.68 | 0.53 | 1.02 |
| GBD: gap-filled bulk density (g/cm$^3$) | | | | |

Table 2

|  | Example 1 | Example 2 | Comp. Example 1 | Comp. Example 2 |
|---|---|---|---|---|
| Length-weighted geometric mean diameter - 2 x standard deviation, $\mu$m | 5.4 | 6.3 | 5.6 | 7.4 |
| Probability, $Ln(X) \geq ln(10)$, % | 0.00 | 3.52 | 0.64 | 4.43 |

While the present invention has been described in conjunction with the embodiments considered to be most practical and preferable at this writing, it should be understood that the present invention is not limited to the embodiments disclosed in the specification of the present application but various modifications and variations can be made within limits not contradicting the purport or the idea of the present invention that can be read from the appended claims and the full text of the specification, and such modifications and variations are considered to be within the technical scope of the present invention. This application is based on Japanese Patent Application No. 2003-330404 filed on September 22, 2003, and Japanese Patent Application No. 2004-268532 filed on September 15, 2004, the content of which is incorporated hereto in its entirety by reference. The present application further pertains to the following embodiments:

(i) An alumina fiber aggregate comprising alumina short fibers and having such properties that when the diameters of said alumina short fibers are represented by x ($\mu$m), the rate at which the natural logarithmic value lnx in lognormal distribution of x is less than ln3 is not more than 2 %, and the value left after deducting from the length-weighted geometric mean of said fiber diameters a value twice its standard error is not more than 6 $\mu$m.

(ii) An alumina fiber aggregate according to embodiment (i), wherein the rate at which the natural logarithmic value in lognormal distribution of diameters x of said alumina short fibers is less than ln3 is not more than 1 %.

(iii) An alumina fiber aggregate according to embodiment (i) or (ii), wherein the ratio of the alumina short fibers with diameters of not less than 10 $\mu$m is not more than 4 %.

(iv) An alumina fiber aggregate according to any one of embodiments (i) to (iii), wherein the sum of the length-weighted geometric mean diameter of said alumina short fibers and the value twice its standard error is not more than 6.5 $\mu$m.

(v) An alumina fiber aggregate according to any one of embodiments (i) to (iv), wherein the difference between the length-weighted geometric mean of diameters of said alumina short fibers and the value twice its standard error is not more than 5.5 $\mu$m.

(vi) An alumina fiber aggregate according to any one of embodiments (i) to (v), wherein the length-weighted geometric mean diameter is 4.0 to 5.5 $\mu$m.

(vii) An alumina fiber aggregate according to any one of embodiments (i) to (vi), wherein said alumina short fibers are those obtained by a precursor fiber forming method.

(viii) A support mat for catalytic converters, said support mat comprising an alumina fiber aggregate as defined in any one of embodiments (i) to (viii).

**Claims**

1. Process for producing an alumina fiber aggregate comprising spinning with a spinning solution by blowing method to obtain an alumina short fiber precursor aggregate and calcining the alumina short fiber precursor aggregate, **characterized in that** the scatter of gas flow velocity per slit from an air nozzle is within $\pm$ 15 %, and the scatter of liquid flow rate per spinning solution supply nozzle is within $\pm$ 5 %.

2. The process for producing an alumina fiber aggregate according to claim 1, wherein the scatter of gas flow velocity per slit from the air nozzle is within $\pm$ 8 %.

3. The process for producing an alumina short fiber aggregate according to claim 1 or 2, wherein the scatter of liquid flow rate per spinning solution supply nozzle is within $\pm$ 2 %.

4. An alumina fiber aggregate obtainable from the process as defined in any one of claims 1 to 3.

**European Patent Office**

# SUPPLEMENTARY EUROPEAN SEARCH REPORT

Application Number

EP 07 01 9035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 105658 A (MITSUBISHI KAGAKU SANSHI CORP) 9 April 2003 (2003-04-09) * the whole document * | 4 | INV. D04H1/42 D04H1/72 |
| A |  | 1-3 |  |
| A | EP 0 495 466 A (MITSUBISHI CHEM IND [JP] MITSUBISHI CHEM CORP [JP]) 22 July 1992 (1992-07-22) * column 4, line 46 - line 54; figure 1; examples 1,2 * | 1-4 |  |

TECHNICAL FIELDS SEARCHED (IPC)

D04H
F01N
D01F

The supplementary search report has been based on the last set of claims valid and available at the start of the search.

| Place of search | Date of completion of the search | Examiner |
|---|---|---|
| Munich | 3 January 2008 | Demay, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C04)

## ANNEX TO THE EUROPEAN SEARCH REPORT
## ON EUROPEAN PATENT APPLICATION NO.

EP 07 01 9035

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2008

| Patent document cited in search report | | Publication date | Patent family member(s) | | Publication date |
|---|---|---|---|---|---|
| JP 2003105658 | A | 09-04-2003 | NONE | | |
| EP 0495466 | A | 22-07-1992 | CA | 2058911 A1 | 18-07-1992 |
| | | | DE | 69227134 D1 | 05-11-1998 |
| | | | DE | 69227134 T2 | 18-02-1999 |
| | | | JP | 2602460 B2 | 23-04-1997 |
| | | | JP | 5051806 A | 02-03-1993 |
| | | | US | 5286182 A | 15-02-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3282362 B
- JP 8174687 A
- JP 2000080547 A
- JP 2602460 B
- EP 495466 A
- JP 2003330404 A
- JP 2004268532 A

### Non-patent literature cited in the description

- *Official Journal of the European Communities,* 2001, vol. 21 (8